# EUROPÄISCHE PATENTSCHRIFT

(11) **EP 0 821 222 B1**
(45) Veröffentlichungstag und Bekanntmachung des Hinweises auf die Patenterteilung: **22.09.2004**
(21) Anmeldenummer: 97111089.5
(22) Anmeldetag: 03.07.1997
(51) Int. Cl.: G01K 7/22

(54) **Sensor, insbesondere Temperatursensor, und Spritzgiesswerkzeug zur Herstellung des Sensors**
Sensor, in particular temperature sensor, and injection mould for manufacturing the same
Capteur, en particulier capteur de température, et moule d'injection pour sa fabrication

(30) Priorität: 25.07.1996 DE 19629963
(43) Veröffentlichungstag der Anmeldung: 28.01.1998
(73) Patentinhaber: Siemens Aktiengesellschaft, 80333 München (DE)
(72) Erfinder: Acht, Joachim, 65936 Frankfurt (DE); Schimmel, Ralf, 35789 Weilmünster (DE)
(74) Vertreter: Rassler, Andrea, Dipl.-Phys.

(56) Entgegenhaltungen:
- EP-A- 0 239 459
- DE-A- 4 117 290
- JP-A- 8 327 464

## Beschreibung

Die Erfindung betrifft einen Sensor, insbesondere Temperaturserisor, mit einem von elektrisch isolierendem Kunststoff umspritzten, vormontierbaren Gebereinsatz, welcher ein zur Erfassung einer Meßgröße vorgesehenes Geberelement, elektrische Anschlüsse und von dem Geberelement zu den Anschlüssen führende elektrische Verbindungselemente hat. Weiterhin betrifft die Erfindung ein Spritzgießwerkzeug mit einer Spritzgießform und mit einem in die Spritzgießform hineinbewegbaren Kern.

Bei einem bekannten Sensor der vorstehenden Art, siehe DE 41 17 290 A1, wird zunächst das Geberelement mit den Anschlußleitungen verlötet und anschließend in die Spritzgießform eingesetzt und mit Kunststoff umspritzt. Die Bereiche der Anschlußleitungen, die nicht von Kunststoff umspritzt werden sollen, werden in der Regel vom Kern des Spritzgießwerkzeuges freigehalten und bilden nach dem Umspritzen des Gebereinsatzes die Anschlüsse des Sensors, auf dem ein Stecker einer Anschlußleitung aufgesteckt wird.

Nachteilig bei dem bekannten Sensor ist, daß er kostenintensiv aufgebaut und zu fertigen ist. Beispielsweise ist es erforderlich, die Anschlußleitungen mit einer hohen Festigkeit zu dimensionieren, da das Geberelement ansonsten beim Umspritzen mit Kunststoff sehr leicht aus seiner vorgesehenen Position in der Spritzgußform zu einer Seite hin auswandern kann.

Man könnte daran denken, das Geberelement zu seiner Fixierung in der vorgesehenen Lage an einem Halteteil zu befestigen, das sich beim Umspritzen mit Kunststoff an der Wandung einer Spritzgießform abstützt. Hierdurch gestaltet sich die Herstellung des Sensors jedoch besonders aufwendig. Eine derartige Befestigung des Halteteils insbesondere bei einer Serienfertigung des Sensors ist sehr kostenintensiv und führt zu Sensoren mit einer inhomogenen Oberfläche. Um ein Kippen des Gebereinsatzes zu verhindern, muß das Halteteil zudem sehr große Abmessungen aufweisen.

Der Erfindung liegt das Problem zugrunde, einen Sensor der eingangs genannten Art so zu gestalten, daß er möglichst kostengünstig herzustellen ist. Weiterhin soll ein Spritzgießwerkzeug, mit dem der Sensor möglichst einfach herzustellen ist, entwickelt werden.

Das erstgenannte Problem wird erfindungsgemäß dadurch gelöst, daß der Sensor zumindest eine von den Anschlüssen bis zu dem Geberelement oder bis zu einem das Geberelement haltenden Halteteil geführte Vertiefung hat.

Durch diese Gestaltung benötigt der Sensor zu seiner Herstellung besonders wenig Kunststoff, so daß er besonders geringe Materialkosten hat und daher kostengünstig herzustellen ist. Die Vertiefung des Sensors wird beim Umspritzen des Gebereinsatzes von dem Kern des Spritzgießwerkzeuges erzeugt. Der Gebereinsatz wird damit von dem Kern abgestützt, so daß ein Auswandern des Geberelementes nach einer Seite hin weitgehend vermieden wird. Weiterhin ist der Sensor durch die Vertiefung besonders massearm, so daß beispielsweise der als Temperatursensor ausgebildete Sensor eine kurze Ansprechzeit aufweist. Die Anordnung des Halteteils im Sensor hat den Vorteil, daß das Geberelement vollständig von dem Kunststoff umspritzt und damit vor Korrosion und elektrischem Kurzschluß geschützt ist.

Das Halteteil ist gemäß einer vorteilhaften Weiterbildung der Erfindung besonders leicht mit Kunststoff zu umspritzen, wenn es U-förmig gestaltet und mit seiner Basis zum Geberelement weisend angeordnet ist.

Das Halteteil wird gemäß einer anderen vorteilhaften Weiterbildung der Erfindung sicher in dem Kunststoff gehalten, wenn es seine Basis durchdringende Bohrungen hat.

Das Halteteil ist gemäß einer anderen vorteilhaften Weiterbildung der Erfindung besonders strömungsgünstig gestaltet, wenn es an seiner Basis dachförmig, mit zum Geberelement hin abfallenden Flanken gestaltet ist.

Das Halteteil kann gemäß einer anderen vorteilhaften Weiterbildung der Erfindung einfach über die Anschlußleitungen geschoben werden, ohne daß die Gefahr eines Verbiegens der Anschlußleitungen besteht, wenn das Halteteil eine Bohrung und ein Langloch zur Durchführung der Anschlußleitungen des Geberelements hat. Hierdurch gestaltet sich die Vormontage des Gebereinsatzes besonders einfach.

Das zweitgenannte Problem, nämlich die Schaffung eines Spritzgießwerkzeuges zur Herstellung des Sensors mit einer äußeren Spritzgießform und mit einem in die äußere Spritzgießform hineinbewegbaren Kern, wird erfindungsgemäß dadurch gelöst, daß der Kern an seinem in die Spritzgießform hineinragenden Ende eine Aufnahme zur kraftoder formschlüssigen Befestigung des Geberelementes oder einen das Geberelement haltenden Halteteils hat.

Durch diese Gestaltung läßt sich der vormontierte Gebereinsatz einfach an dem Kern befestigen. Der Kern ist als Bauteil der Spritzgießform üblicherweise besonders stabil gestaltet und vermag damit den Gebereinsatz besonders zuverlässig in seiner vorgesehenen Position zu haltern. Nach dem Einführen des Kerns mit dem Gebereinsatz in die Spritzgießform und dem Umspritzen des Gebereinsatzes und des Kerns mit Kunststoff läßt sich der Kern einfach aus dem Sensor herausziehen. Hierbei löst sich die Befestigung des Gebereinsatzes von dem Kern. Bei besonders stabil gestalteten Anschlußleitungen kann die Aufnahme des Kerns auch zur Befestigung des Gebereinsatzes an den Anschlußleitungen ausgebildet sein.

Der Gebereinsatz läßt sich gemäß einer anderen vorteilhaften Weiterbildung der Erfindung besonders einfach in der vorgesehenen Position auf dem Kern befestigen, wenn der Kern zum Haltern des Gebereinsatzes abstehenden Erhebungen des Halteteils entsprechende Einkerbungen aufweist. Beim Herausziehen des Kerns aus dem Sensor werden die Erhebungen des Halteteils einfach abgeschert. Diese Erhebungen können beispielsweise von dem Halteteil hervorspringende Nasen sein.

Die Anschlußleitungen werden zusätzlich von dem Kern in einer vorgesehenen Position gehalten, wenn der Kern Aufnahmen für die Anschlußleitungen an ihren dem Geberelement abgewandten Enden aufweist. Hierdurch sind die aus dem Sensor herausgeführten Enden der Anschlußleitungen für ein Aufstecken eines Steckers einer Signalleitung in einer vorgesehenen Position gehalten.

Der Kern läßt sich nach dem Umspritzen mit Kunststoff gemäß einer anderen vorteilhaften Weiterbildung der Erfindung einfach aus dem Sensor herausziehen, wenn er zu seinem freien Ende hin sich verjüngend gestaltet ist.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: einen Längsschnitt durch einen erfindungsgemäßen Sensor,
- Fig.2: eine Schnittdarstellung durch den Sensor aus Figur 1 entlang der Linie II - II,
- Fig.3: eine Schnittdarstellung durch den Sensor aus Figur 1 entlang der Linie III - III,
- Fig.4: eine Schnittdarstellung eines Halteteils aus Figur 1 vor einem Umspritzen mit Kunststoff,
- Fig.5: eine Schnittdarstellung durch das Halteteil aus Figur 4 entlang der Linie V - V,
- Fig.6: ein schematische Darstellung eines Teils eines Spritzgießwerkzeuges zur Herstellung des Sensors aus Figur 1.

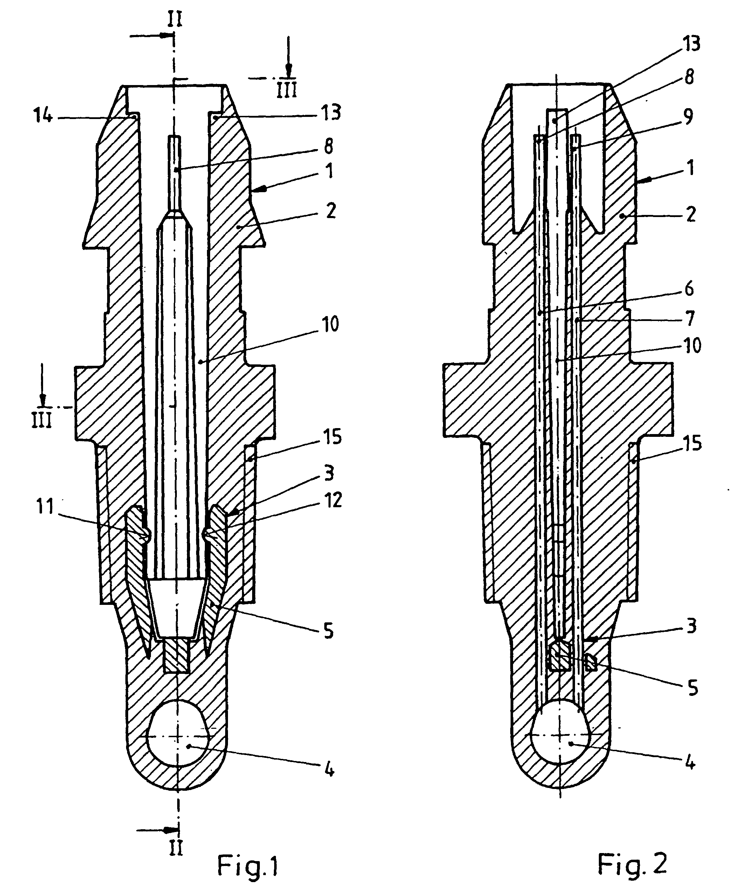

Die Figuren 1 und 2 zeigen jeweils im Längsschnitt einen zur Messung einer Temperatur ausgebildeten Sensor 1. Der Sensor 1 hat innerhalb einer Kunststoffumspritzung 2 einen Gebereinsatz 3. Der Gebereinsatz 3 ist eine aus einem Geberelement 4, einem Halteteil 5 und zwei Anschlußleitungen 6, 7 vormontierbare Baueinheit. Die Anschlußleitungen 6, 7 ragen an einem Ende des Sensors 1 aus der Kunststoffumspritzung 2 heraus und bilden Anschlüsse 8, 9 auf die ein nicht dargestellter Stecker einer Signalleitung aufgesteckt werden kann. Das Geberelement 4 befindet sich vollständig innerhalb der Kunststoffumspritzung 2 in dem den Anschlüssen 8, 9 abgewandten Ende des Sensors 1. An dieser Stelle überzieht die Kunststoffumspritzung 2 das Geberelement 4 mit einer im Vergleich zum übrigen Sensor 1 relativ dünnen Wandstärke.

Von dem die Anschlüsse 8, 9 aufweisenden Ende des Sensors 1 erstreckt sich eine Vertiefung 10 bis zu dem Halteteil 5. Diese Vertiefung 10 ist nicht mit Kunststoff ausgefüllt und zu dem Geberelement 4 verjüngend gestaltet. In das untere Ende der Vertiefung 10 ragen nasenförmige Erhebungen 11, 12 des Halteteils 5 hinein.

Im Bereich der Anschlüsse 8, 9 sind in der Kunststoffumspritzung 2 Stege 13, 14 angeordnet, die als Verdrehsicherung für den Stecker der Signalleitung dienen. Die Kunststoffumspritzung 2 hat ein Außengewinde 15, mit dem sich der Sensor 1 an einem beliebigen, nicht dargestellten Bauteil befestigen läßt.

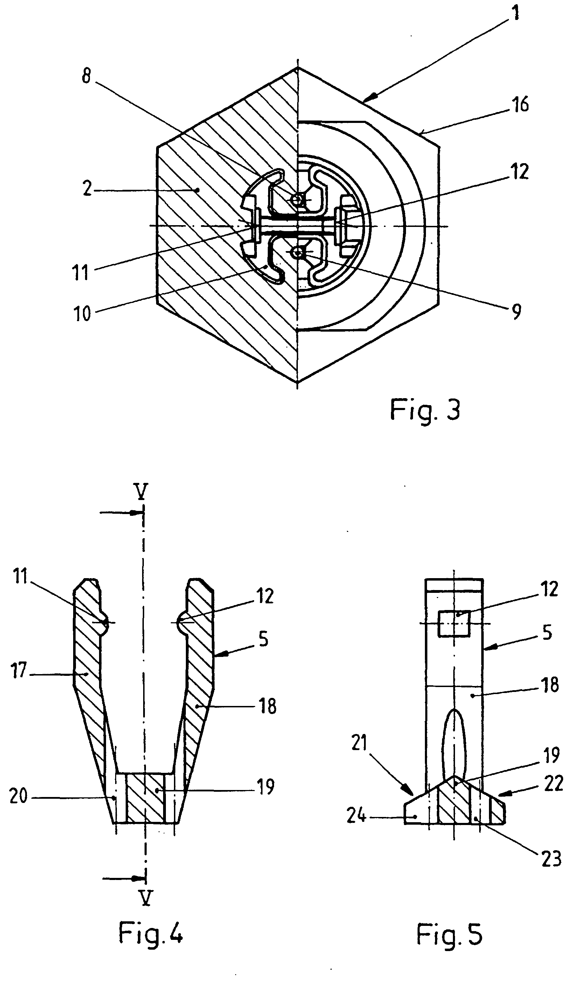

Die Figur 3 läßt in einer Schnittdarstellung entlang der Linie III - III erkennen, daß der Sensor 1 an seiner Außenseite einen Sechskant 16 zum Ansetzen eines nicht dargestellten Schraubenschlüssels hat.

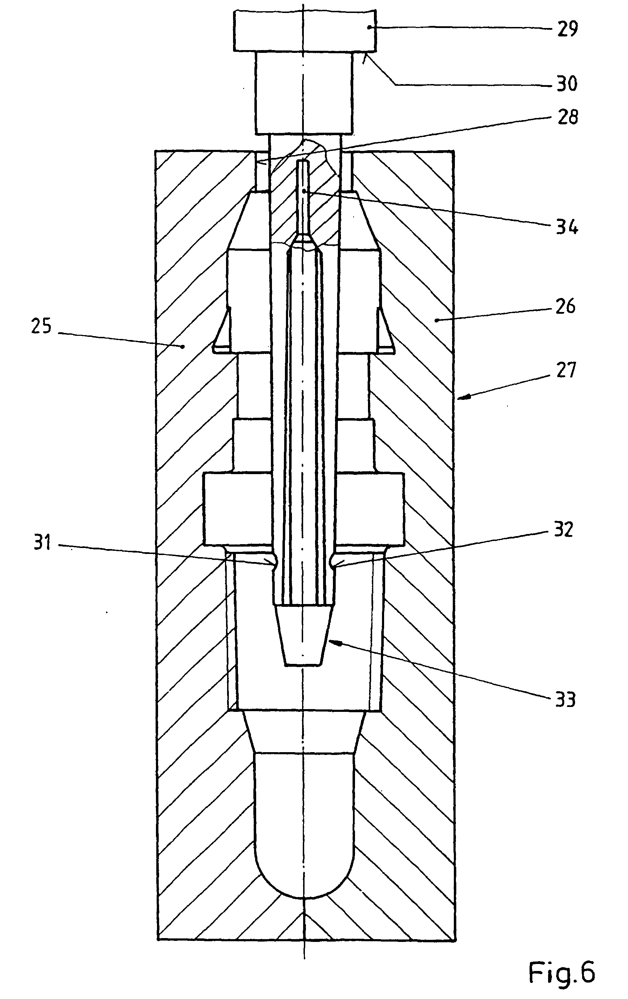

Das Halteteil 5 aus der Figur 1 ist vor einer Umspritzung mit Kunststoff in den Figuren 4 und 5 dargestellt. Das Halteteil 5 ist U-förmig, mit Schenkeln 17, 18 und einer Basis 19 gestaltet und ist in seinem unteren Bereich von Bohrungen 20 durchdrungen. Diese Bohrungen 20 werden wie in Figur 1 dargestellt mit Kunststoff ausgefüllt. Die Schenkel 17, 18 des Halteteils 5 weisen jeweils die nasenförmigen Erhebungen 11, 12 auf. Die Basis 19 des Halteteils 5 ist dachförmig mit nach unten hin abfallenden Flanken 21, 22 gestaltet und weist eine Bohrung 23 und ein Langloch 24 auf. Durch die Bohrung 23 und das Langloch 24 werden bei der Vormontage des in Figur 2 dargestellten Gebereinsatzes 3 die Anschlußleitungen 6, 7 geführt. Das Halteteil 5 ist aus einem elektrisch isolierenden Kunststoff gefertigt.

Die Figur 6 zeigt einen Teil eines Spritzgießwerkzeugs mit einer aus zwei Schalen 25, 26 zusammengesetzten äußeren Spritzgießform 27. Durch eine am oberen Ende der Spritzgießform 27 angeordneten Öffnung 28 kann ein beweglicher Kern 29 bis zu einem als Anschlag ausgebildeten Absatz 30 eingeführt werden. Der Kern hat jeweils eine Aufnahme 34 in Form eines Sacklochs für die oberen Enden der in den Figuren 1 und 2 dargestellten Anschlußleitungen 6, 7. Der Kern 29 hat an seinem freien, in die Spritzgießform 27 hineinragenden Ende zwei sich gegenüberstehende Einkerbungen 31, 32 und einen Konus 33. Die Einkerbungen 31, 32 dienen zur Befestigung des in Figur 1 dargestellten Gebereinsatzes 3 an den nasenförmigen Erhebungen 11, 12 des Halteteils 5. Das Halteteil 5 wird zusätzlich durch den Konus 33 des Kerns 29 zentriert. Hierdurch läßt sich der Gebereinsatz 3 schnell und zuverlässig auf dem Kern 29 befestigen und in die Spritzgießform 27 einbringen. Nach dem Umspritzen des Gebereinsatzes 3 mit Kunststoff wird der Kern 29 aus dem Sensor 1 herausgezogen und hinterläßt die in den Figuren 1 und 2 dargestellte Vertiefung 10.

## Patentansprüche

1. Sensor (1) insbesondere Temperatursensor, mit einem von elektrisch isolierendem Kunststoff umspritzten, vormontierbaren Gebereinsatz (3), welcher ein zur Erfassung einer Meßgröße vorgesehenes Geberelement (4) und von dem Geberelement (4) zu elektrischen Anschlüssen (8, 9) führende elektrische Verbindungselemente (6, 7) hat, **dadurch gekennzeichnet, daß** der Sensor (1) zumindest eine von den Anschlüssen (8, 9) bis zu dem Geberelement (4) oder bis zu einem das Geberelement (4) haltenden Halteteil (5) geführte nicht mit Kunststoff ausgefüllte Vertiefung (10) hat.

2. Sensor nach Anspruch 1, **dadurch gekennzeichnet, daß** das Halteteil (5) U-förmig gestaltet und mit seiner Basis (19) zum Geberelement (4) weisend angeordnet ist.

3. Sensor nach Anspruch 1 oder 2, **dadurch gekennzeichnet, daß** das Halteteil (5) seine Basis (19) durchdringende Bohrungen (20) hat.

4. Sensor nach zumindest einem der vorhergehenden Ansprüche, **dadurch gekennzeichnet, daß** das Halteteil (5) an seiner Basis (19) dachförmig, mit zum Geberelement (4) hin abfallenden Flanken (21, 22) gestaltet ist.

5. Sensor nach zumindest einem der vorhergehenden Ansprüche, **dadurch gekennzeichnet, daß** das Halteteil (5) eine Bohrung (23) und ein Langloch (24) zur Durchführung der Anschlußleitungen (6, 7) des Geberelements (4) hat.

6. Spritzgießwerkzeug zur Herstellung des Sensors (1) nach Anspruch 1 mit einer äußeren Spritzgießform (27) und mit einem durch eine Öffnung (28) der äußeren Spritzgießform (27) in die äußere Spritzgießform (27) hineinbewegbaren Kern (29), **dadurch gekennzeichnet, daß** der Kern (29) an seinem in die Spritzgießform (27) hineinragenden Ende eine Aufnahme (31, 32, 33) zur kraft- oder formschlüssigen Befestigung des Geberelementes (4) oder eines das Geberelement (4) haltenden Halteteils (5) hat.

7. Spritzgießwerkzeug nach Anspruch 6, **dadurch gekennzeichnet, daß** der Kern (29) zum Haltern des Geberelementes (4) abstehenden Erhebungen (11, 12) des Halteteils (5) entsprechende Einkerbungen (31, 32) aufweist.

8. Spritzgießwerkzeug nach Anspruch 6 oder 7, **dadurch gekennzeichnet, daß** der Kern (29) Aufnahmen (34) für die Anschlußleitungen (6, 7) an ihren dem Geberelement (4) abgewandten Enden aufweist.

9. Spritzgießwerkzeug nach zumindest einem der vorhergehenden Ansprüche, **dadurch gekennzeichnet, daß** der Kern (29) zu seinem freien Ende hin sich verjüngend gestaltet ist.

## Claims

1. Sensor (1), in particular temperature sensor, with a transmitter insert (3) which can be preassembled, is encapsulated by electrically insulating plastic and has a transmitter element (4), intended for sensing a measured variable, and electrical connecting elements (6, 7), leading from the transmitter element (4) to electrical terminals (8, 9), **characterized in that** the sensor (1) has at least one depression (10). which is not filled with plastic, taken from the terminals (8, 9) to the transmitter element (4) or to a holding part (5) holding the transmitter element (4).

2. Sensor according to Claim 1, **characterized in that** the holding part (5) is shaped in the form of a U and is arranged with its base (19) facing the transmitter element (4).

3. Sensor according to Claim 1 or 2, **characterized in that** the holding part (5) has bores (20) penetrating its base (19).

4. Sensor according to at least one of the preceding claims, **characterized in that** the holding part (5) is shaped in the form of a roof on its base (19), with flanks (21, 22) sloping down towards the transmitter element (4).

5. Sensor according to at least one of the preceding claims, **characterized in that** the holding part (5) has a bore (23) and a slot (24) for leading through the connection lines (6, 7) of the transmitter element (4).

6. Injection-moulding tool for manufacturing the sensor (1) according to Claim 1, with an outer injection mould (27) and with a core (29), which can be moved into the outer injection mould (27) through an opening (28) in the outer injection mould (27), **characterized in that** the core (29) has at its end protruding into the injection mould (27) a receptacle (31, 32, 33) for the non-positive or positive fastening of the transmitter element (4) or of a holding part (5) holding the transmitter element (4).

7. Injection-moulding tool according to Claim 6, **characterized in that**, for holding the transmitter element (4), the core (29) has notches (31, 32) corresponding to protruding elevations (11, 12) of the holding part (5).

8. Injection-moulding tool according to Claim 6 or 7, **characterized in that** the core (29) has receptacles (34) for the connection lines (6, 7) at their ends remote from the transmitter element (4).

9. Injection-moulding tool according to at least one of the preceding claims, **characterized in that** the core (29) is shaped such that it tapers towards its free end.

## Revendications

1. Capteur (1), notamment capteur de température, muni d'un insert transmetteur (3) pouvant être pré-assemblé, surmoulé avec de la matière synthétique isolant électriquement, cet insert transmetteur ayant un élément transmetteur (4), prévu pour l'enregistrement d'une grandeur de mesure, ainsi que des éléments de raccordement (6, 7) électriques menant de l'élément transmetteur (4) a ux raccordements électriques (8, 9), **caractérisé en ce que** le capteur (1 ) a un approfondissement (10) non rempli de matière synthétique, mené des raccordements (8, 9) jusqu'à l'élément transmetteur (4) ou jusqu'à une pièce de maintien (5) maintenant l'élément transmetteur (4).

2. Capteur selon la revendication 1, **caractérisé en ce que** la pièce de maintien (5) est exécutée en forme de U et qu'elle est placée en étant tournée vers l'élément transmetteur (4) avec sa base (19).

3. Capteur selon la revendication 1 ou 2, **caractérisé en ce que** la pièce de maintien (5) a des trous (20) traversant sa base (19).

4. Capteur selon au moins l'une quelconque des revendications précédentes, **caractérisé en ce que** la pièce de maintien (5) est exécutée en forme de toit sur sa base (19), avec des flancs (21, 22) inclinés vers l'élément transmetteur (4).

5. Capteur selon au moins l'une des revendications précédentes, **caractérisé en ce que** la pièce de maintien (5) a un trou (23) et un trou oblong (24) pour le passage des lignes de raccordement (6, 7) de l'élément transmetteur (4).

6. Moule d'injection pour la fabrication du capteur (1) selon la revendication 1, comprenant un moule d'injection extérieur (27) et un noyau (29) pouvant être déplacé dans le moule d'injection extérieur (27) par une ouverture (28) du moule d'injection extérieur (27), **caractérisé en ce que** le noyau (29), sur son extrémité dépassant dans le moule d'injection (27), a un logement (31, 32, 33) pour la fixation par adhérence ou par conjugaison de forme de l'élément transmetteur (4) ou d'une pièce de maintien (5) maintenant l'élément transmetteur (4).

7. Moule d'injection selon la revendication 6, **caractérisé en ce que** le noyau (29) destiné à maintenir l'élément transmetteur (4) présente des encoches (31, 32) correspondant à des élévations (11, 12) en saillie de la pièce de maintien (5).

8. Moule d'injection selon la revendication 6 ou 7, **caractérisé en ce que** le noyau (29) présente des logements (34) pour les lignes de raccordement (6, 7) sur les extrémités de celles-ci, détournées de l'élément transmetteur (4).

9. Moule d'injection selon au moins l'une quelconque des revendications précédentes, **caractérisé en ce que** le noyau (29) est exécuté en se rétrécissant en direction de son extrémité libre.
